Europäisches Patentamt

European Patent Office

Office européen des brevets

(19)

(11) Numéro de publication : **0 234 999**
**B1**

## (12) FASCICULE DE BREVET EUROPÉEN

(45) Date de publication du fascicule du brevet :
07.03.90

(21) Numéro de dépôt : 87400192.8

(22) Date de dépôt : 28.01.87

(51) Int. Cl.⁵ : **B 60 H   1/00**, G 05 D 23/19

(54) **Dispositif de commande d'une installation de conditionnement d'air pour véhicule automobile.**

(30) Priorité : 06.02.86 FR 8601634

(43) Date de publication de la demande :
02.09.87 Bulletin 87/36

(45) Mention de la délivrance du brevet :
07.03.90 Bulletin 90/10

(84) Etats contractants désignés :
DE ES FR IT

(56) Documents cités :
FR-A- 2 379 392

(73) Titulaire : VALEO
64, avenue de la Grande Armée
F-75848 Paris Cédex 17 (FR)

(72) Inventeur : Brenier, Henri
8 bis, avenue Voltaire
F-78600 Maisons Laffitte.(FR)
Inventeur : Vigent , Gérard
2, Résidence La Villeparc
F-78310 Maurepas (FR)

(74) Mandataire : Netter, André et al
Cabinet NETTER 40, rue Vignon
F-75009 Paris (FR)

### Description

L'invention concerne un dispositif de commande d'une installation de conditionnement d'air pour véhicule automobile.

Conformément au préambule de la revendication 1, il est déjà connu de disposer successivement, sur le passage de l'air admis dans l'habitacle d'un véhicule automobile, des moyens de refroidissement et des moyens de chauffage, qui sont constitués par exemple par des échangeurs de chaleur formant respectivement un évaporateur alimenté en fluide froid de travail par un compresseur et un radiateur alimenté par le liquide chaud de refroidissement du moteur du véhicule, et qui sont commandés de façon indépendante l'un de l'autre par des circuits de commande appropriés en fonction de la différence entre la température de l'air dans l'habitacle et une température de consigne fixée par l'occupant du véhicule (FR-A-2 379 392).

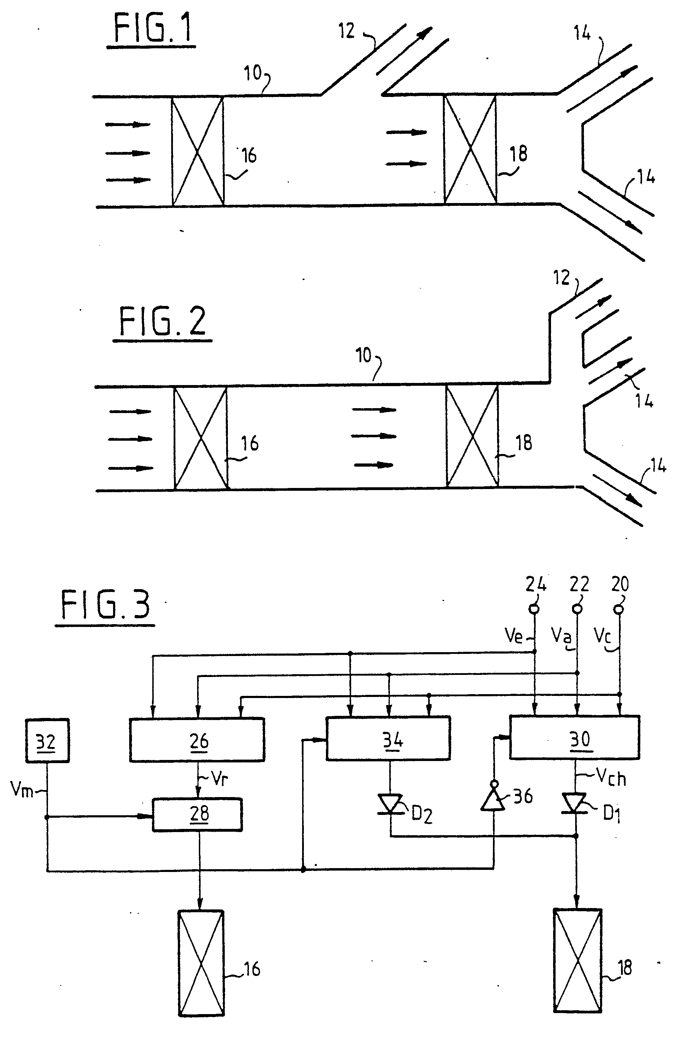

Les deux échangeurs de chaleur formant les moyens de refroidissement et les moyens de chauffage de l'air sont en général montés l'un après l'autre dans une même gaine de passage d'air, qui aboutit dans l'habitacle du véhicule par des bouches d'aération et par des bouches de chauffage. Selon les cas (voir Figures 1 et 2), les moyens de chauffage de l'air peuvent être placés, soit en amont, soit en aval d'un embranchement menant aux bouches d'aération, tandis que les moyens de refroidissement de l'air sont toujours placés en amont de cet embranchement. De façon générale, l'installation de conditionnement d'air peut fonctionner selon trois modes différents, à savoir aération (les bouches de chauffage étant alors fermées), chauffage (les bouches d'aération étant alors fermées), et chauffage plus aération (les bouches d'aération et les bouches de chauffage étant ouvertes).

Lorsque l'installation fonctionne en mode chauffage, on peut prévoir, avantageusement, que la température de l'air à la sortie des moyens de refroidissement soit maintenue à une valeur sensiblement constante légèrement supérieure à 0 °C. Cela permet de provoquer une condensation sur les moyens de refroidissement de l'humidité contenue dans l'air admis dans l'installation de conditionnement, de sorte que l'air qui est ensuite chauffé et admis dans l'habitacle du véhicule automobile est de l'air sec.

Lorsque l'installation de conditionnement d'air fonctionne en mode aération ou en mode aération plus chauffage, la température de l'air à la sortie des moyens de refroidissement varie entre 0 °C et la température d'entrée de l'air dans l'installation. Dans tous les cas, la température de l'air à la sortie des moyens de refroidissement est toujours supérieure à 0 °C, pour éviter le givrage de ces moyens de refroidissement.

De façon générale, le circuit de commande des moyens de chauffage d'air en fonction de la différence entre une température de consigne et la température de l'air dans l'habitacle du véhicule, a un gain important, de façon à pouvoir suivre rapidement les variations de température dans l'habitacle.

Il en résulte toutefois un inconvénient lorsque, dans le cas d'une température extérieure comprise entre 15 et 20 °C environ, le véhicule est brusquement éclairé par le soleil. En effet, cet ensoleillement influence de façon importante la sonde mesurant la température intérieure, ce qui provoque une réaction importante par l'intermédiaire du circuit de commande des moyens de chauffage et donc un refroidissement brutal de l'air admis dans le véhicule par les bouches de chauffage, ce qui est très désagréable pour l'occupant du véhicule.

L'invention a notamment pour but de pallier cet inconvénient.

Elle propose à cet effet un dispositif de commande d'une installation de conditionnement d'air pour véhicule automobile qui comprend des moyens de refroidissement et des moyens de chauffage de l'air admis dans l'habitacle du véhicule, ce dispositif de commande comprenant un premier circuit produisant un signal de commande des moyens de chauffage et un deuxième circuit produisant un signal de commande des moyens de refroidissement, en fonction de la différence entre une température de consigne et la température dans l'habitacle, caractérisé en ce qu'il comprend un troisième circuit de commande, monté en parallèle sur le premier circuit et ayant un gain moins important que celui du premier circuit, et un moyen d'inhibition sélective de l'un ou de l'autre de ces deux circuits en fonction de l'état d'un organe de commande définissant le mode de fonctionnement de l'installation de conditionnement d'air.

L'invention permet ainsi de conserver les avantages inhérents au gain important du circuit de commande des moyens de chauffage d'air, mais d'en supprimer les inconvénients quand nécessaire, au moyen d'un circuit de commande supplémentaire qui présente un gain moins important et qui remplace automatiquement le premier circuit de commande, par exemple quand l'installation de conditionnement d'air ne fonctionne pas en mode chauffage.

Selon un mode de réalisation particulier de l'invention, l'organe de commande précité comprend un commutateur produisant un signal déterminé uniquement lorsque l'installation de conditionnement d'air est en mode chauffage, ce commutateur étant relié à une entrée de chacun des premier et troisième circuits de commande pour inhiber le troisième circuit par ledit signal, et pour inhiber le premier circuit en l'absence dudit signal.

Par exemple, ce commutateur peut être relié directement à une entrée appropriée du troisième circuit de commande, et être relié à la même entrée du premier circuit de commande par l'intermédiaire d'un inverseur.

L'invention prévoit avantageusement que ce commutateur est également relié à un circuit de modification du signal de commande produit par le deuxième circuit de commande, pour maintenir à une valeur constante légèrement supérieure à 0 °C la température de l'air à la sortie des moyens de refroidissement, quand l'installation de conditionnement d'air est en mode chauffage.

On assure ainsi le chauffage de l'habitacle par de l'air sec, qui a été débarrassé de son humidité par passage sur les moyens de refroidissement d'air de l'installation.

Dans la description qui suit, faite à titre d'exemple, on se réfère aux dessins annexés, dans lesquels :

la figure 1 représente schématiquement une première forme de réalisation d'une installation connue de conditionnement d'air pour véhicule automobile ;

la figure 2 représente schématiquement une seconde forme de réalisation d'une telle installation ;

la figure 3 représente schématiquement le dispositif de commande selon l'invention.

L'installation de conditionnement d'air représentée en figure 1 comprend essentiellement une gaine ou un conduit 10 comportant une entrée d'air mis en vitesse par un moyen quelconque approprié, par exemple un ventilateur, un embranchement 12 menant à des bouches d'aération prévues dans l'habitacle du véhicule automobile, et des embranchements 14 menant à des bouches de chauffage prévues également dans l'habitacle. Des volets pivotants sont en général montés dans les embranchements 12 et 14 pour autoriser ou interdire le passage de l'air vers les bouches d'aération et de chauffage respectivement.

Des moyens 16 de refroidissement d'air sont montés dans le conduit 10, entre son entrée et l'embranchement 12 menant aux bouches d'aération, et des moyens 18 de chauffage de l'air sont montés dans le conduit 10 entre l'embranchement 12 et les embranchements 14 menant aux bouches de chauffage. De façon classique, les moyens de refroidissement d'air comprennent une boucle de circulation d'un fluide de travail comportant un évaporateur, un compresseur et un condensateur, dont l'évaporateur est constitué par un échangeur de chaleur placé dans le conduit 10 pour refroidir l'air qui circule dans ce conduit. Les moyens 18 de chauffage de l'air sont constitués par exemple par un échangeur de chaleur alimenté par le liquide chaud de refroidissement du moteur à combustion interne équipant le véhicule automobile.

Des circuits de commande, qui seront décrits en détail en référence à la figure 3, sont associés aux moyens 16 et 18 pour réguler la température de l'air admis dans l'habitacle en fonction de la différence entre la température dans cet habitacle et une température de consigne fixée par l'occupant du véhicule automobile.

L'installation représentée en figure 2 diffère de celle de la figure 1 en ce que l'embranchement 12 menant aux bouches d'aération est formé en aval des moyens 18 de chauffage d'air prévus dans le conduit 10, et non entre les moyens 16 de refroidissement et les moyens de chauffage 18.

On fera maintenant référence à la figure 3, qui représente le dispositif de commande des moyens 16 de refroidissement d'air et des moyens 18 de chauffage d'air prévus dans une installation de conditionnement d'air pour véhicule automobile telle que celle de la figure 1 ou celle de la figure 2.

Ce dispositif comprend un moyen 20, tel qu'un potentiomètre, actionnable par l'occupant du véhicule et délivrant une tension Vc correspondant à une température de consigne souhaitée par l'occupant dans l'habitacle du véhicule, une sonde de température 22 délivrant un signal de tension Va représentant la température de l'air dans l'habitacle du véhicule automobile et, éventuellement, une sonde de température 24 délivrant une tension Ve représentant la température de l'air à l'extérieur du véhicule. Les signaux de tension Vc, Va et Ve sont appliqués aux entrées d'un circuit 26 de commande des moyens 16 de refroidissement d'air, qui produit, à partir de la différence Vc-Va et en tenant compte éventuellement de la tension Ve représentant la température extérieure, un signal Vr appliqué à l'entrée d'un circuit limiteur bas 28 dont le signal de sortie commande le fonctionnement ou l'arrêt des moyens 16 de refroidissement d'air. Les tensions Vc, Va, Ve sont également appliquées aux entrées d'un circuit 30 de commande des moyens de chauffage d'air 18, ce circuit 30 produisant un signal de sortie Vch appliqué par exemple à une entrée d'un moyen de réglage du débit de liquide chaud circulant dans l'échangeur de chaleur formant les moyens 18.

Le dispositif comprend également un moyen de sélection du mode de fonctionnement de l'installation de conditionnement d'air, comprenant un commutateur 32 produisant un signal de tension Vm qui est appliqué à une entrée du circuit limiteur bas 28 et qui peut prendre par exemple la valeur 1 lorsque l'installation est en mode chauffage, et la valeur 0 lorsque l'installation est dans un autre mode (aération, ou aération plus chauffage).

L'invention prévoit également un troisième circuit de commande 34, aux entrées duquel sont appliqués les signaux de tension Vc, Va et Ve et dont la sortie est reliée à la sortie du circuit de commande 30, des diodes D1 et D2 étant prévues sur les sorties des circuits de commande 30 et 34 pour les isoler l'un de l'autre. Le circuit 34 est sensiblement identique au circuit 30 de commande des moyens de chauffage 18, mais a un gain moins important que celui du circuit 30. Par ailleurs, le signal de tension Vm produit par le commutateur 32 est également appliqué à une entrée du circuit 30 par l'intermédiaire d'un inverseur 36, et est appliqué directement à l'entrée correspondante du circuit 34.

Ce dispositif fonctionne de la façon suivante :

Lorsque le sélecteur de fonctionnement de l'installation de conditionnement d'air a été placé dans une position correspondant au mode chauffage, le commutateur associé 32 produit un signal de sortie Vm au niveau 1, qui est appliqué au circuit limiteur bas 28 pour maintenir la température de l'air à la sortie des moyens refroidisseurs 16 à une valeur sensiblement constante légèrement supérieure à 0 °C, qui est appliqué également au circuit de commande 34 pour l'inhiber et qui est appliqué au circuit de commande 30 après avoir été inversé par l'inverseur 36 et qui n'a donc aucun effet sur le fonctionnement du circuit 30. Dans ces conditions, tout l'air circulant dans l'installation de conditionnement d'air est admis dans l'habitacle du véhicule automobile par les bouches de chauffage et est à une température régulée par le circuit de commande 30. L'air ainsi admis dans l'habitacle du véhicule automobile est de l'air sec, qui s'est débarrassé de son humidité par condensation de celle-ci sur l'échangeur de chaleur formant les moyens de refroidissement 16.

Lorsqu'on sélectionne le mode de fonctionnement chauffage plus aération de l'installation, le commutateur associé 32 produit un signal de sortie Vm qui est au niveau 0. Ce signal appliqué au circuit limiteur bas 28 qui permet une variation de la température de l'air à la sortie des moyens de refroidissement 16 en fonction du signal de sortie Vr du circuit de commande 26, tout en empêchant cette température de l'air de descendre jusqu'à 0 °C pour éviter le givrage des moyens 16. Ce signal de tension Vm au niveau 0 est inversé par l'inverseur 36 et est donc appliqué au niveau 1 au circuit de commande 30, pour inhiber ce circuit. Par contre, ce signal Vm est appliqué au niveau 0 au circuit de commande 34, sans avoir d'effet sur le fonctionnement de ce circuit qui commande donc les moyens de chauffage 18 à la place du circuit de commande 30. Comme le gain du circuit 34 est inférieur à celui du circuit 30, un ensoleillement brusque se traduira par une faible diminution de la température de l'air admis dans l'habitacle par les bouches de chauffage, ce qui améliore le confort de l'occupant du véhicule.

Lorsqu'on sélectionne le mode de fonctionnement aération de l'installation, les bouches de chauffage sont fermées, et l'action des moyens de chauffage 18 sur la température de l'air admis dans l'habitacle est sensiblement négligeable. Cette température est déterminée uniquement par les moyens de refroidissement 16, sous commande du circuit 26 et du circuit limiteur bas 28.

## Revendications

1. Dispositif de commande d'une installation de conditionnement d'air pour véhicule automobile, qui comprend des moyens (16) de refroidissement et des moyens (18) de chauffage de l'air admis dans l'habitacle du véhicule, ce dispositif comprenant un premier circuit (30) produisant un signal de commande des moyens de chauffage (18) et un deuxième circuit (26) produisant un signal de commande des moyens de refroidissement (16), en fonction de la différence entre une température de consigne et la température dans l'habitacle, caractérisé en ce qu'il comprend un troisième circuit de commande (34), monté en parallèle sur le premier circuit de commande (30) et ayant un gain moins important que celui du premier circuit de commande (30), et un moyen (32, 36) d'inhibition sélective de l'un ou de l'autre de ces deux circuits (30, 34) de commande des moyens de chauffage en fonction de la position d'un organe de commande (32) définissant le mode de fonctionnement de l'installation de conditionnement d'air.

2. Dispositif selon la revendication 1, caractérisé en ce que cet organe de commande comprend un commutateur (32) relié à une entrée de chacun des premier et troisième circuits (30, 34). Ce commutateur produisant un signal (Vm) de valeur prédéterminée (Vm = 1) lorsque l'installation de conditionnement d'air est en mode chauffage, pour inhiber le troisième circuit (34) quand le signal (Vm) a ladite valeur prédéterminée, et pour inhiber le premier circuit (30) lorsque le signal (Vm) a une valeur différente (Vm = 0) de la valeur prédéterminée.

3. Dispositif selon la revendication 2, caractérisé en ce que le commutateur (32) est relié directement à une entrée de l'un (34) des deux circuits et par l'intermédiaire d'un inverseur (36) à l'entrée correspondante de l'autre (30) de ces deux circuits.

4. Dispositif selon la revendication 2 ou 3, caractérisé en ce que le commutateur (32) est également relié à un circuit (28) de limitation du signal de commande (Vr) produit par le deuxième circuit de commande (26), pour maintenir à une valeur constante légèrement supérieure à 0 °C la température de l'air à la sortie des moyens de refroidissement (16) quand l'installation de conditionnement d'air est en mode chauffage.

## Claims

1. A control system for an air conditioning installation for an automotive vehicle, which comprises air cooling means (16) and air heating means (18), for air admitted into the passenger compartment of the vehicle, the said control system comprising a first circuit (30) producing a control signal for the air heating means (18), and a second circuit (26) producing a control signal for the air cooling means (16), as a function of the difference between a predetermined, required temperature and the actual temperature in the passenger compartment, characterised in that it further comprises a third control circuit (34), mounted in parallel with the first control circuit (30) and having a gain which is smaller than that of the first control circuit (30), together with a selective inhibiting means (32, 36) for selecting one or the other of the two said control circuits (30, 34) for the air heating means as a function of the position of a control device (32) defining the operating mode of the air conditioning installation.

2. A system according to Claim 1, characterised in that the said control device comprises a commutator (32) connected to an input of each of the first and third circuits (30, 34), this commutator producing a signal (Vm) having a predetermined value (Vm = 1) when the air conditioning installation is in a heating mode, so as to inhibit the third circuit (34) when the signal (Vm) has the said predetermined value, and so as to inhibit the first circuit (30) when the signal (Vm) has a value (Vm = 0) which is different from the said predetermined value thereof.

3. A system according to Claim 2, characterised in that the commutator (32) is connected directly to an input of one (34) of the two circuits, being also connected through an inverter (36) to the corresponding input of the other one (30) of the said two circuits.

4. A system according to Claim 2 or Claim 3, characterised in that the commutator (32) is also connected to a circuit (28) for limiting the control signal (Vr) produced by the second control circuit (26), for the purpose of maintaining the air temperature at the outlet of the air cooling means (16) at a constant value, slightly greater than 0 °C, when the air conditioning installation is in a heating mode.

**Patentansprüche**

1. Steuerungsvorrichtung für die Klimaanlage eines Kraftfahrzeuges, bestehend aus Mitteln (16) zur Kühlung und Mitteln (18) zur Erwärmung der in die Fahrzeugkabine eingeleiteten Luft, wobei diese Vorrichtung einen ersten Stromkreis (30) umfaßt, der ein Steuersignal für die Beiheizungsmittel (18) erzeugt, und einen zweiten Stromkreis (26), der ein Steuersignal für die Kühlmittel (16) entsprechend der Differenz zwischen einer Solltemperatur und der in der Kabine vorherrschenden Temperatur erzeugt, dadurch gekennzeichnet, daß ein dritter Steuerkreis (34) vorhanden ist, der parallel zum ersten Steuerkreis (30) geschaltet ist und eine geringere Verstärkung aufweist als der erste Steuerkreis (30), sowie ein Mittel (32, 36) für die wahlweise Sperrung des einen oder des anderen dieser beiden Stromkreise (30, 34) für die Steuerung der Heizmittel entsprechend der Stellung eines Bedienungsorgans (32), wodurch die Funktionsweise der Klimaanlage bestimmt wird.

2. Vorrichtung nach Anspruch 1, dadurch gekennzeichnet, daß dieses Bedienungsorgan einen Umschalter (32) enthält, der mit einem Eingang jeweils des ersten und des dritten Stromkreises (30, 34) verbunden ist und ein Signal (Vm) mit festgelegtem Wert (Vm = 1) erzeugt, wenn die Klimaanlage auf Heizbetrieb gestellt ist, um den dritten Stromkreis (34) zu sperren, wenn das Signal (Vm) den genannten, festgelegten Wert hat, und um den ersten Stromkreis (30) zu sperren, wenn das Signal (Vm) einen vom festgelegten Wert abweichenden Wert (Vm = 0) aufweist.

3. Vorrichtung nach Anspruch 2, dadurch gekennzeichnet, daß der Umschalter (32) direkt mit einem Eingang eines (34) der beiden Stromkreise und über einen Wendeschalter (36) mit dem entsprechenden Eingang des anderen (30) dieser beiden Stromkreise verbunden ist.

4. Vorrichtung nach Anspruch 2 oder 3, dadurch gekennzeichnet, daß der Umschalter (32) ebenfalls mit einem Stromkreis (28) zur Begrenzung des Steuersignals (Vr) verbunden ist, welches von dem zweiten Steuerkreis (26) erzeugt wird, um die Temperatur am Austritt der Kühlmittel (16) auf einem konstanten, etwas über 0 °C liegenden Wert zu halten, wenn die Klimaanlage auf Heizbetrieb steht.

# FIG.1

12
14
10
16
18
14
14

# FIG.2

12
10
14
16
18
14
14

# FIG.3

24  22  20

Ve  Va  Vc

32

26

34

30

Vm

Vr

28

D2

36

Vch

D1

16

18